# EUROPÄISCHE PATENTANMELDUNG

(11) **EP 3 176 483 A1**
(43) Veröffentlichungstag der Anmeldung: **07.06.2017**
(21) Anmeldenummer: 15197813.7
(22) Anmeldetag: 03.12.2015
(51) Int. Cl.: F16L 5/04, C04B 28/14

(54) **BRANDSCHUTZ- UND ISOLIERSCHAUM AUF ANORGANISCHER BASIS UND DESSEN VERWENDUNG**

(71) Anmelder: HILTI Aktiengesellschaft, 9494 Schaan (LI)
(72) Erfinder: Kluj, Esther Rahel, 86899 Landsberg (DE); Paetow, Mario, 86859 Igling (DE); Jeromenok, Jekaterina, 86153 Augsburg (DE); Simon, Sebastian, 86807 Buchloe Lindenberg (DE)
(74) Vertreter: Hilti Aktiengesellschaft Corporate Intellectual Property

(57) **Zusammenfassung**

Beschrieben wird eine hydraulisch abbindende Zusammensetzung zur Herstellung von anorganischen Brandschutz- und/oder Isolierschäumen, die wenigstens ein hydraulisches Bindemittel, eine Treibmittelmischung, wenigstens eine thermisch expandierbare Verbindung und gegebenenfalls einen Schaumstabilisator enthält, wobei die wenigstens eine thermisch expandierbare Verbindung, abhängig von deren Teilchengröße und der eingestellten Dichte der geschäumten Zusammensetzung in solch einer Menge enthalten ist, dass durch deren Expansion beim Erhitzen der Zusammensetzung über deren Onset-Temperatur die Schaumstruktur der geschäumten Zusammensetzung nicht zerstört wird, sowie ein daraus hergestellter Brandschutz oder Isolierschaum und deren Verwendung.

## Beschreibung

Die Erfindung betrifft einen Brandschutz- und Isolierschaum auf anorganischer Basis, insbesondere einen Brandschutz- und/oder Isolier-Ortsschaum auf Basis einer hydraulisch abbindenden Zusammensetzung, sowie dessen Verwendung.

In Europa müssen Brandschutzsysteme den Brandschutzanforderungen der DIN/EN genügen, welche im Wesentlichen eine Temperaturweiterleitung von Feuerseite nach Luftseite um max. 180 K an definierten Stellen erlaubt. Zusätzlich muss gewährleistet werden, dass Feuer und Rauchgase nicht durchtreten können.

Als Bindemittel für Montage-, Isolierungs- und Brandschutzschäume werden oft organische oder anorganische Brandschutzsysteme verwendet. Diese können z.B. als 1 K-, 2K-Aerosoldose oder als 2K-Kartuschenschaum ausgebracht werden. Insbesondere für Ortschäume, die vom Verbraucher vor Ort ausgebracht werden, wäre es sehr vorteilhaft, wenn die Stoffe, mit denen man in Kontakt kommt, möglichst unbedenklich wären.

Organische Brandschutzsysteme haben den Nachteil, dass sie durch den Brand stark verändert werden. Nur durch Bildung einer beständigen Aschekruste kann eine ausreichende Feuerwiderstandsdauer erreicht werden. Zu dieser Aschekruste wird ein hoher Anteil an Brandschutzadditiven benötigt. Diese Bestandteile sind teuer. Zusätzlich werden häufig auch Flammschutzmittel zur Reduzierung der Brennbarkeit benötigt. Die organischen Systeme tragen allerdings zu einer Erhöhung der Brandlast bei und sind daher gerade im Fluchtwegebereich nachteilig. Häufig sind die organischen Systeme kennzeichnungspflichtig und daher nur unter bestimmten Voraussetzungen und Schutzmaßnahmen des Anwenders verwendbar.

Anorganische Schäume auf Gips/Zement Basis, wie beispielsweise in der EP 2 045 227 A1 beschrieben, haben die Eigenschaft, dass sie zwar brandbeständig sind und im Brandfall kaum und im Idealfall nicht schrumpfen, wie es bei organisch basierenden Systemen durch wegbrennende Bestandteile der Fall ist, sie lassen aber durch ihre feste Struktur keine Intumeszenz (Aufquellen im Brandfall) zu. Durch diese Intumeszenz, wie sie beispielsweise durch Blähgrafit entsteht, werden sie entweder zerstört oder sie lassen keine Expansion zu. Andererseits entsteht beispielsweise bei Kabeln mit einer stärkeren Kunststoffisolierung durch das Aufquellen der Isolierung in der Hitze bei vielen anorganischen Brandschutzschäumen ein Spalt, der zu einem Versagen der Abschottung im Brandfall führen kann. Deshalb können diese anorganischen Systeme nicht für alle Brandschutzanwendungen oder Brandschutzprodukte eingesetzt werden, die eines Aufquellens bedürfen, wie es z.B. bei stärkeren Kunststoffisolierungen bei Kabeln, Kabelleerrohren und dergleichen erforderlich ist.

Die Aufgabe der vorliegenden Erfindung besteht nun darin, ein intumeszierendes Schaumsystem bereitzustellen, das sich vor Ort auf der Baustelle ohne Maschineneinsatz einfach und mit hoher Schaumausbeute (bei einer Dichte von 150 bis 800 kg/m³) verarbeiten lässt und einen Brandschutzschaum mit erhöhter Feuerwiderstandsdauer ergibt.

Zur Lösung der Aufgabe ist eine hydraulisch abbindende Zusammensetzung vorgesehen, die
(i) wenigstens ein hydraulisches Bindemittel,
(ii) eine Treibmittelmischung,
(iii) wenigstens eine thermisch expandierbare Verbindung und
(iv) gegebenenfalls einen Schaumstabilisator
enthält, wobei die wenigstens eine thermisch expandierbare Verbindung, abhängig von deren Teilchengröße und der eingestellten Dichte der geschäumten Zusammensetzung in solch einer Menge enthalten ist, dass durch deren Expansion beim Erhitzen der Zusammensetzung über deren Onset-Temperatur die Schaumstruktur der geschäumten Zusammensetzung nicht zerstört wird.

Überraschender Weise hat sich herausgestellt, dass es bei einem Brandschott, welches mit der erfindungsgemäßen Zusammensetzung ausgeschäumt wurde, im Brandfall durch die Anwesenheit einer thermisch expandierbaren Verbindung zu keiner größeren Spaltbildung um die Kabel mit stärkerer Kabelisolierung kommt. Durch das Aufquellen und spätere Wegbrennen der Isolierung von z.B. Kabeln in der Hitze entsteht bei den bekannten Gipsschäumen ein Spalt, der zu einem frühen Versagen der Abschottung führen kann. Die Erfinder haben herausgefunden, dass die aufquellenden thermisch expandierbaren Verbindungen trotz der festen Struktur der ausgehärteten Zusammensetzung diesen Spalt verschließen können, ohne dass die Zellstruktur der ausgehärteten Zusammensetzung zerstört wird und dadurch die Brandschutzeigenschafen der Zusammensetzung leidet, wenn die Bedingungen für den Einsatz der thermisch expandierbaren Verbindung entsprechend gewählt werden.

Die erfindungsgemäßen Zusammensetzungen haben, insbesondere gegenüber den Brandschutzschäumen auf organischer Basis, ferner den Vorteil, dass sie kennzeichnungsfrei formuliert werden können. Außerdem können sie als nicht brennbar eingestuft und damit z.B. auch in Fluchtwegen eingesetzt werden. Darüber hinaus sind die Zusammensetzungen preislich sehr interessant.

Die hydraulischen Bindemittel weisen einen nahezu neutralen bis alkalischen pH-Wert in Wasser auf. Als hydraulisches Bindemittel wird jede mineralische Zusammensetzung verstanden, die bei Kontakt mit Wasser irreversibel steinartig aushärtet. Dabei sind Bindemittel mit kurzen Abbindezeiten, wie Schnellzement, besonders bevorzugt, da bei diesen der Abbindevorgang so schnell verläuft, dass der durch die Treibmittelmischung gebildete Schaum nicht bereits beginnt in sich zusammen zu fallen, bevor er durch das Bindemittel genügend Eigenstabilität erreicht hat. Ein vollständiges Abbinden ist hierfür nicht erforderlich, es reicht bereits ein Abbindestadium aus, bei dem sich der Schaum selbst tragen kann. Hierbei sind Abbindegeschwindigkeiten von Vorteil, bei denen der Schaum eine Eigenstabilität nach spätestens 60 Minuten erreicht, bevorzugt nach spätestens 40 Minuten, besonders bevorzugt nach spätestens 30 Minuten, ganz besonders bevorzugt nach spätestens 20 Minuten.

Vorzugsweise handelt es sich bei dem hydraulischen Bindemittel um anorganische Bindemittel, wie Zement oder Gips, oder aber auch Mischungen verschiedener Bindemittel. Geeignete anorganische Bindemittel sind: Magnesiumchlorid-Zemente, Portlandzemente, Puzzolanzemente, Hochofenzemente, sogenannte Schnellzemente, Metalloxidzemente und dergleichen. Besonders gut geeignet wegen des Hydratwassergehaltes in gebundener Form und wegen des guten Verarbeitungsverhaltens sind Calciumsulfat-Bindemittel, wie das α- und das ß-Calciumsulfat-Halbhydrat (CaSO4·½H₂0), Stuckgips, Putzgips oder das Anhydrit (CaSO₄). Besonders gut geeignet sind härtere Gipsarten, wie beispielsweise das α-Calciumsulfat-Halbhydrat, gegebenenfalls in beschleunigter Form.

Das hydraulische Bindemittel kann mit einem üblicherweise hierfür verwendeten Härtungsmittel ausgehärtet werden. Diese ist im allgemeinen Wasser oder eine wässrige Lösung, welche gegebenenfalls weitere Bestandteile der Zusammensetzung und/oder Additive enthalten kann.

Vorteilhaft bei diesen erfindungsgemäß eingesetzten Bindemittelsystemen ist, dass diese unter Umgebungstemperaturen abbinden und kein Brennvorgang wie bei keramischen Systemen erforderlich ist. Ferner wirkt der neutrale bzw. alkalische pH-Wert der Bindemittelmatrix bei Kontakt mit Metallen nicht korrosiv oder sogar korrosionsinhibierend. So wird verzinkter Stahl nicht angegriffen, ebensowenig wird Kupfer, wie es in Leitungssystemen verwendet wird, durch derartige Bindemittel angegriffen. Dies ist insbesondere dann von Vorteil, wenn die erfindungsgemäße Zusammensetzung zum Ausschäumen von Durchbrüchen o.ä. eingesetzt wird, durch die Leitungssysteme geführt sind.

In einer bevorzugten Ausführungsform ist das hydraulische Bindemittel ein Calciumsulfat-Bindemittel, wovon insbesondere härtere Typen, wie das α-Calciumsulfat-Halbhydrat bevorzugt sind, da die Wahrscheinlich, dass deren Schaumstruktur durch die Expansion der thermisch expandierbaren Verbindung zerstört wird, geringer ist.

In den trockenen Verschlussmassen soll das hydraulische Bindemittel in Mengen von 10 bis 90, bevorzugt 30 bis 80 Gew.-% enthalten sein.

Zur Schaumbildung wird erfindungsgemäß die Zusammensetzung während des Abbindevorgangs durch Freisetzung eines Treibmittels, insbesondere eines Treibgases aufgeschäumt. Als Treibmittel sind alle gängigen Treibmittel geeignet, die insbesondere durch chemische Reaktion zwischen zwei Bestandteilen, der Treibmittelmischung, freigesetzt werden, d.h. ein Gas als eigentliches Treibmittel bilden. Dementsprechend enthält die Zusammensetzung erfindungsgemäß eine Treibmittelmischung, welche Verbindungen umfasst, die erst nach deren Vermischen unter Bildung von Kohlendioxid (CO₂), Wasserstoff (H₂), Sauerstoff (O₂) oder Stickstoff (N₂) miteinander reagieren. In einer bestimmten Ausführungsform findet die chemische Reaktion der Bestandteile der Treibmittelkomponente in Anwesenheit von Wasser statt. Hierdurch kann die Lagerstabilität der erfindungsgemäßen Zusammensetzung erhöht werden, da es bei Abwesenheit von Wasser nicht zum unerwünschten Abbau der Treibmittelkomponente kommt und erst durch Zugeben von Wasser, wie beispielsweise das Anmachwasser im Anwendungsfall, die Freisetzung des Treibmittels ausgelöst wird und damit das Aufschäumen der Zusammensetzung beginnt.

In einer bevorzugten Ausführungsform umfasst die Treibmittelmischung eine Kombination aus einer Verbindung, die Sauerstoff freisetzen kann, ein sogenannter Sauerstoffträger, und einem Katalysator, zur Freisetzung des Sauerstoffs.

Als Sauerstoffträger werden bevorzugt Peroxide, wie z.B. Wasserstoffperoxid, insbesondere in wässriger Lösung, oder Wasserstoffperoxid freisetzende Verbindungen, einschließlich fester Verbindungen, wie z.B. der Wasserstoffperoxid-Harnstoff-Komplex, Natriumpercarbonat und Harnstoffphosphat, eingesetzt.

Als Katalysator werden Metalloxide und/oder Basen eingesetzt. Bevorzugt wird Braunstein (MnO₂) verwendet. Entscheidend ist, dass der eingesetzte Katalysator verschiedene Oxidationsstufen annehmen kann, deren Redoxpotentiale so nahe beieinander liegen, dass bei der Umsetzung mit Wasserstoffperoxid sowohl eine Oxidation als auch eine Reduktion auftreten kann und sich der Katalysator somit nicht verbraucht. Dies wird anhand der folgenden schematischen Reaktionsgleichungen mit M als Übergangsmetall verdeutlicht:

2 M^{II}O + 2 H₂O₂ → M^{III}₂O₃ + 2 H₂O + ½ O₂

M^{III}₂O₃ + H₂O₂ → 2 M^{II}O + H₂O + O₂

Der Vorteil von Treibmittelmischungen auf Basis eines Sauerstoffträgers und eines Katalysators liegt darin, dass sich über die eingesetzte Katalysatormenge die Zersetzungsgeschwindigkeit des Sauerstoffträgers und damit die Schaumbildungsgeschwindigkeit steuern lässt. Andererseits kann die Schaumhöhe bzw. das Porenvolumen des Schaums über die eingesetzte Menge an Sauerstoffträger gesteuert werden. So führen höhere Katalysatormengen zu spontanerer Sauerstofffreisetzung und höhere Sauerstoffträgermengen zu einem erhöhten Porenvolumen und damit einem geringeren spezifischen Gewicht der ausgeschäumten Brandschutzmasse.

Erfindungsgemäße, Sauerstoff freisetzende Treibmittelmischungen enthalten bezogen auf die erfindungsgemäße Zusammensetzung im trocknen Zustand einen Katalysator in einer Menge von etwa 0,01 bis 5 Gew.-%, bevorzugt 0,05 bis 3 Gew.-%, besonders bevorzugt von etwa 0,1 bis 2 Gew.-% sowie einen Sauerstoffträger in einer Menge von etwa 0,1 bis 10 Gew.-%, bevorzugt 0,2 bis 7 Gew.-%, besonders bevorzugt von etwa 1,0 bis 6 Gew.-%.

In einer alternativen Ausführungsform umfasst die Treibmittelmischung eine Säure und eine Verbindung, die mit Säuren unter Bildung von Kohlendioxid reagieren kann.

Als Verbindungen, die mit Säuren unter Bildung von Kohlendioxid reagieren können, können carbonat- und hydrocarbonathaltige Verbindungen, insbesondere Metall- oder (insbesondere quaternäre) Ammoniumcarbonate bzw. Ammoniumhydrogencarbonate verwendet werden, wie Carbonate oder Hydrogencarbonate von Alkali- oder Erdalkalimetallen, zum Beispiel CaCO₃, NaHCO₃, Na₂CO₃, K₂CO₃, (NH₄)₂CO₃ und dergleichen, wobei CaCO₃ (Kreide) bevorzugt ist. Dabei können verschiedene Typen von Kreiden mit unterschiedlichen Korngrößen und unterschiedlicher Oberflächenbeschaffenheit, wie beispielsweise beschichtete oder unbeschichtete Kreide, oder Mischungen von zwei oder mehreren davon verwendet werden. Bevorzugt werden beschichtete Kreidetypen verwendet, da sie langsamer mit der Säure reagieren und somit kontrolliertes Aufschäumen bzw. eine abgestimmte Aufschäumungs- und Aushärtezeit gewährleisten. Es können ebenso Mischungen verschiedener Carbonate bzw. Hydrogencarbonate zum Einsatz kommen.

Als Säure kann jede saure Verbindung verwendet werden, die in der Lage ist, mit carbonat- oder hydrogecarbonathaltigen Verbindungen unter Abspaltung von Kohlendioxid zu reagieren. Geeignete Säuren sind Mineralsäuren, wie Salzsäure, Schwefelsäure und Phosphorsäure, aber auch organische Säuren, wie Ascorbinsäure, Polyacrylsäure, Benzoesäure, Toluolsulfonsäure, Weinsäure, Glycolsäure, Milchsäure; organische Mono-, Di- oder Polycarbonsäuren, wie Essigsäure, Chloressigsäure, Trifluoressigsäure, Fumarsäure, Maleinsäure, Zitronensäure oder dergleichen, Aluminiumdihydrogenphosphat, Natriumhydrogensulfat, Kaliumhydrogensulfat, Aluminiumchlorid, Harnstoffphosphat und andere säurefreisetzende Chemikalien oder Mischungen von zwei oder mehreren davon. Die Säure erzeugt das Gas als eigentliches Treibmittel.

Als Säure-Komponente kann eine wässrige Lösung einer anorganischen und/oder organischen Säure, benutzt werden. Ferner können gepufferte Lösungen von Zitronen-, Wein-, Essig-, Phosphorsäure und dergleichen verwendet werden. Diese wässrige Lösung kann gleichzeitig als Härtungsmittel für das hydraulische Bindemittel dienen.

Es ist jedoch ebenfalls möglich, dass die Säure als Feststoff vorliegt, zum Beispiel in Form eines sauren Salzes einer Mineralsäure, wie Mononatriumphosphat.

Die Carbonat-/Hydrogencarbonatverbindung und/oder die feste Säurekomponente können in beschichteter oder unbeschichteter Form eingesetzt werden. Als Materialien für die Beschichtung kommen beispielsweise Fettsäuren, Wachse oder Metalloxide wie Magnesiumoxid in Frage. Die Beschichtung einer oder beider Komponenten erhöht dabei die Lagerstabilität der gesamten Zusammensetzung, da es nicht zu einer unerwünschten Abbaureaktion vor dem Einsatz kommt. Der Einsatz einer festen Säurekomponente ermöglicht dabei die Formulierung von Einkomponenten-Systemen, die erst am Einsatzort durch Mischen mit Wasser zur Reaktion und damit zur Aushärtung gebracht werden.

In einer weiteren, alternativen Ausführungsform umfasst die Treibmittelmischung Verbindungen, die bei Reaktion miteinander Wasserstoff freisetzten. Hierzu kommen Reaktionen von:
(i) einem oder mehreren unedlen Metallen (z.B. Aluminium, Eisen oder Zink) mit Basen (z.B. ein oder mehrere Alkalimetallhydroxide, wie Natrium-, Kalium- oder Lithiumhydroxid) oder mit ein oder mehreren Säuren, wie oben bei den Carbonaten definiert (vorzugsweise anorganische Säure);
(ii) Metallhydriden (z.B. Natriumhydrid oder Lithiumaluminiumhydrid) mit Wasser, oder
(iii) einer Verbindung, die Si-gebundene Wasserstoffatome aufweist (z.B. Polymethylhydrogensiloxan, bekannt auch als Polymethylhydrosiloxan, aber auch andere Polyalkyl- oder Polyarylhydrogensiloxane) mit Protonendonoren (z.B. Wasser). Geeignet sind u.a. lineare Polyhydrogensiloxane, Tetramere, Copolymere von Dimethysiloxan und Methylhydrosiloxan, Trimethylsilylterminierte Polyhydrogensiloxane, Hydrid-terminierte Polydimethylsiloxane, Triethylsilyl-terminierte Polyethylhydrosiloxane, Hydrid-terminierte Copolymere aus Polyphenylmethylsiloxan und Methylhydrosiloxan und dergleichen.

Als ein möglicher Bestandteil der Treibmittelmischung kommen weiterhin auch Aluminiumspäne in Frage, sofern die restlichen Komponenten der Zusammensetzung dieser beim Vermischen mit Wasser einen stark alkalischen pH-Wert verleihen. In diesem Falle entsteht durch die Reaktion des Aluminiums mit Wasser nach

2 Al + 6 H₂O → 2 Al(OH)₃ + 3 H₂

unter alkalischen Bedingungen gasförmiger Wasserstoff, der die Zusammensetzung aufschäumen kann. Dabei sollte der pH-Wert oberhalb von 10 liegen, bevorzugt oberhalb von 11 oder 12, um eine möglichst rasche Umsetzung des Aluminiums und damit eine möglichst rasche Treibgasfreisetzung sicher zu stellen.

Der Einsatz von Treibmittelmischungen, welche Sauerstoff oder Kohlendioxid freisetzen, haben aus sicherheitstechnischen Gesichtspunkten Vorteile gegenüber denjenigen, die unter Freisetzung von Wasserstoff die Zusammensetzung aufschäumen und sind deswegen bevorzugt.

Liegt die Säure in flüssiger Form vor, so werden solche erfindungsgemäßen Zusammensetzungen als Zweikomponenten-Systeme ausgelegt, bei dem die Carbonat-/Hydrogencarbonatverbindung mit den übrigen festen Bestandteilen die erste Komponente bildet und die Säure in einer zweiten, flüssigen Komponente enthalten ist. Ebenfalls kann im Falle einer festen Säurekomponente diese in Wasser gelöst als zweite Komponente fungieren.

Über die Treibmittelmischung wird die Dichte der geschäumten Zusammensetzung eingestellt, wobei die Dichte entsprechend den Anforderungen bzw. der gewünschten Verwendung der erfindungsgemäßen Zusammensetzung gewählt wird. Die Treibmittelmischung wird besonders bevorzugt in solch einer Menge zugegeben, dass die Zusammensetzung einen Schaum mit einer Dichte von kleiner als 800 g/l (< 800 g/l) ergibt.

Erfindungsgemäße, Kohlendioxid freisetzende Treibmittelmischungen enthalten bezogen auf die erfindungsgemäße Zusammensetzung im trockenen Zustand eine Carbonat- und/oder Hydrogencarbonatverbindung bevorzugt in einer Menge von etwa 0,1 bis 10 Gew.-%, bevorzugt 0,2 bis 7 Gew.-%, besonders bevorzugt von etwa 0,5 bis 5 Gew.- % sowie eine Säure in einer Menge von etwa 0,1 bis 15 Gew.-%, bevorzugt 1 bis 12 Gew.-%, besonders bevorzugt von etwa 1 bis 10 Gew.-%, jeweils bezogen auf Gesamtformulierung.

Um dem gebildeten Schaum eine höhere Stabilität zu verleihen, müssen die gebildeten Zellen bis zur Aushärtung des Bindemittels stabil bleiben, um den Kollaps der polymeren Schaumstruktur zu verhindern. Eine Stabilisierung wird umso notwendiger, je niedriger die Dichte des Schaumstoffes sein soll, d.h. je größer die Volumenexpansion ist und je länger die Abbindezeit ist. Eine Stabilisierung wird gewöhnlich mittels Schaumstabilisatoren erreicht. Dieser bewirkt einerseits, dass die durch die Treibmittelmischung freigesetzten Gase in der Brandschutzmasse möglichst fein verteilte Gasblasen bilden und damit einen feinporigen Schaum liefern, welcher gute Brandschutzeigenschaften aufweist, und andererseits, dass dieser Schaum so lange stabilisiert wird, bis das Bindemittel dem Schaum eine ausreichende Stabilität verleiht, die ein Zusammenfallen des Schaums verhindert. Außerdem lässt sich die Porengröße des Schaums über den Schaumstabilisator beeinflussen. Dabei spielt die Art des Stabilisators, dessen eingesetzte Menge und das verwendete Bindemittel eine Rolle. Die gewünschte Porengröße und Struktur lässt sich dabei durch wenige Versuche ermitteln und damit an den Anwendungszweck anpassen.

Sofern erforderlich, kann die erfindungsgemäße Zusammensetzung daher ferner einen Schaumstabilisator enthalten. Als Schaumstabilisatoren eignen sich beispielsweise anionische, kationische, amphotere und nichtionische Tenside sowie Mischungen hieraus, Bentonit, Stärke und Stärkederivate, Gelatine, Cellulose und Cellulosederivate oder Polymere und Polymerdispersionen, hydrophobiertes Calciumcarbonat (CaCO₃), hydrophobiertes Titanoxid (TiO₂), hydrophobiertes Aluminiumoxid (Al₂O₃) oder Gemische der hydrophobierten Verbindungen und dergleichen, Alkylpolyglycoside, EO/PO-Blockcopolymere, Alkyl- oder Arylalkoxylate, Siloxanalkoxylate, Ester der Sulfobernsteinsäure und/oder Alkali- oder Erdalkalimetallalkanoate eingesetzt verwendet werden. Diese sind nach dem Fachmann an sich bekannten Methoden durch Umsetzung von längerkettigen Monoalkoholen mit Mono-, Di- oder Polysacchariden erhältlich. Die längerkettigen Monoalkohole, die gegebenenfalls auch verzweigt sein können, weisen bevorzugt 4 bis 22 C-Atome, bevorzugt 8 bis 18 C-Atome und besonders bevorzugt 10 bis 12 C-Atome in einem Alkylrest auf. Im Einzelnen genannt seien als längerkettige Monoalkohole 1-Butanol, 1-Propanol, 1-Hexanol, 1-Oktanol, 2-Ethylhexanol, 1-Decanol, 1-Undecanol, 1-Dodecanol (Laurylalkohol), 1 -Tetradecanol (Myristylalkohol) und 1- Octadecanol (Stearylalkohol). Es können auch Gemische der genannten längerkettigen Monoalkohole eingesetzt werden. Alternativ ist es auch möglich eine Suspension kolloidaler Partikel als Stabilisationsmittel zu verwenden. In dieser Hinsicht wird Bezug genommen auf die WO 2007/068127 A1, deren Inhalt hiermit in diese Anmeldung aufgenommen wird. Bevorzugt wird hydrophobiertes Calciumcarbonat (CaCO₃), hydrophobiertes Titanoxid (TiO₂), hydrophobiertes Aluminiumoxid (Al₂O₃) und oder Gemische davon verwendet.

Die Schaumstabilisatoren können in irgendeiner der Komponenten der erfindungsgemäßen Zusammensetzung enthalten sein, so lange diese nicht miteinander reagieren.

Die Schaumstabilisatoren können in einer Menge von etwa 0,1 bis 10 Gew.-%, bevorzugt 0,2 bis 8 Gew.-%, besonders bevorzugt von etwa 1 bis 4 Gew.-%, bezogen auf die Gesamtformulierung, eingesetzt werden.

Erfindungsgemäß enthält die Zusammensetzung wenigstens eine thermisch expandierbare Verbindung. "*Thermisch expandierbar*" bedeutet hierbei, dass die Verbindung bei Überschreiten einer bestimmten Temperatur, der sogenannten Onset-Temperatur ihr Volumen vergrößert. "*Onset-Temperatur*" ist hierbei, die Temperatur, bei der die thermisch bedingte Expansion beginnt. Die Volumenvergrößerung erfolgt durch das Aufblähen einer einzelnen Verbindung, die, ohne dass eine chemische Reaktion zwischen zwei oder mehreren Verbindungen stattgefunden hat, bei Hitzeeinwirkung Gase freisetzen, welche die Volumenvergrößerung verursachen. Die thermisch expandierbare Verbindung ist dabei bevorzugt unter Graphit-Interkallationsverbindungen (Blähgraphit), blähfähigem silikatischen Material oder Kombinationen davon ausgewählt, wobei Graphit-Interkallationsverbindungen (Blähgraphit) oder blähfähiger Vermiculit bevorzugt sind.

Als Graphit-Interkallationsverbindungen kommen beispielsweise bekannte Einlagerungsverbindungen von SOₓ, NOₓ, Halogen und/oder starken Säuren in Graphit in Frage. Diese werden auch als Graphitsalze bezeichnet. Bevorzugt sind Graphit-Interkallationsverbindungen, die bei Temperaturen (Onset-Temperaturen) von beispielsweise 120 bis 350°C unter Aufblähen SO₂, SO₃, NO und/oder NO₂ abgeben. Die Graphit-Interkallationsverbindungen liegen bevorzugt in Form von Plättchen vor, wobei auch andere Formen möglich sind. Die Größe der Plättchen korreliert mit dem Volumen, welches beim Erhitzen durch die Graphit-Interkallationsverbindungen durch deren Expansion generiert wird.

Um die Brandschutzeigenschaften der geschäumten erfindungsgemäßen Zusammensetzung nach deren Aushärten zu erhalten, darf deren Schaumstruktur nicht durch die Expansion der thermisch expandierbaren Verbindung zerstört werden. Dabei haben die Erfinder herausgefunden, dass zum einen die Menge an thermisch expandierbarer Verbindung und zum anderen die Größe der Teilchen und damit das Expansionsvolumen bzw. der entstehende Expansionsdruck kritisch ist.

Dementsprechend ist als wenigstens eine thermisch expandierbare Verbindung eine Verbindung auszuwählen, deren Expansionseigenschaften, wie Expansionsvolumen und Expansionsdruck, die Schaumstruktur der erfindungsgemäßen Zusammensetzung beim Erhitzen der Zusammensetzung über die Onset-Temperatur der thermisch expandierbaren Verbindung nicht zerstört. Ferner ist die Menge der thermisch expandierbaren Verbindung so zu wählen, dass zwar eine Expansion dieser Verbindung oberflächlich bzw. in den Zellen des Schaumes erfolgt, diese aber nicht die Schaumstruktur beim Erhitzen der Zusammensetzung über die Onset-Temperatur der thermisch expandierbaren Verbindung zerstört.

Bevorzugt werden daher die wenigstens eine thermisch expandierbare Verbindung und deren Menge, so ausgewählt, dass durch die Expansionseigenschaften, wie das Expansionsvolumen bzw. der Expansionsdruck, der thermisch expandierbaren Verbindung beim Erhitzen der erfindungsgemäßen Zusammensetzung über die Onset-Temperatur der wenigstens einen thermisch expandierbaren Verbindung der aus der Zusammensetzung gebildete Schaum - nach dessen Aushärten - nicht zerstört wird. Ob der Schaum zerstört wird, lässt sich daran erkennen, dass die Struktur im Brandfall durch die Konvektion der Flammen nicht abgebaut wird. Der Fachmann kann ohne weiteres anhand von Experimenten herausfinden, welche thermisch expandierbaren Verbindung in welcher Menge eingesetzt werden kann, ohne dass die Schaumstruktur der Zusammensetzung zerstört wird.

In einer Ausführungsform ist die thermisch expandierbare Verbindung eine Graphit-Interkallationsverbindung, wobei es sich als vorteilhaft herausgestellt hat, wenn das Expansionsvolumen der thermisch expandierbaren Verbindung größer als 70 ml/g, bevorzugt größer als 120 ml/g, besonders bevorzugt größer als 200 ml/g beträgt. Nachdem das Expansionsvolumen unter anderen mit der Partikelgröße der Verbindungen korreliert, ist eine Partikelgröße von min. 80% > 75 µm bevorzugt, von 80% > 150 µm weiter bevorzugt und von 80% > 300 µm besonders bevorzugt.

In einer alternativen Ausführungsform ist die thermisch expandierbare Verbindung ein expandierbarer Vermiculit, wobei es sich als vorteilhaft herausgestellt hat, wenn das Expansionsvolumen größer als 3 ml/g, bevorzugt größer als 5 ml/g, besonders bevorzugt größer als 10 ml/g beträgt. Die Partikelgröße des expandierbaren Vermiculits liegt dabei bevorzugt im Bereich von 0,5 bis 2 mm.

Für die vorliegende Erfindung geeignete Graphit-Interkallationsverbindungen sind im Handel erhältlich. Im Allgemeinen sind die Verbindungen in den erfindungsgemäßen Brandschutzelementen gleichmäßig verteilt. In dieser Hinsicht wird Bezug genommen auf die EP 1489136 A1, deren Inhalt hiermit in diese Anmeldung aufgenommen wird.

Die Erfinder haben ferner herausgefunden, dass die Menge an eingesetzter thermisch expandierbarer Verbindung mit der gewünschten bzw. eingestellten Dichte des Schaumes korrliert. So führen bei wenig aufgeschäumten Zusammensetzung bereits kleinere Mengen an thermisch expandierbarer Verbindung, insbesondere bei Verbindungen, die eine hohe Expansionsrate bzw. einen großen Blähdruck erzeugen können, zur Zerstörung des Schaumes oder zu Abplatzungen an den äußeren Bereichen der ausgehärteten Zusammensetzung.

Erfindungsgemäß ist die wenigstens eine thermisch expandierbare Verbindung, abhängig von deren Teilchengröße und der eingestellten Dichte der geschäumten Zusammensetzung, in solch einer Menge enthalten, dass durch die Expansion der thermisch expandierbaren Verbindung beim Erhitzen der Zusammensetzung über deren Onset-Temperatur die Schaumstruktur der geschäumten Zusammensetzung nicht zerstört wird. Dies bedeutet, dass Verbindungen mit geringerem Expansionsvolumen in einer größeren Menge enthalten sein können und umgekehrt.

Dementsprechend wird für eine thermisch expandierbare Verbindung, welche ein hohes Expansionsvolumen erzeugt, wie beispielsweise die Graphit-Interkallationsverbindungen, vorgeschlagen, deren Menge, bezogen auf die gesamte Zusammensetzung, abhängig von der angestrebten Schaumdicht wie folgt zu wählen:
- 0,5 bis 6 Gew.-%, bevorzugt: 0,8 bis 4 Gew.-%, besonders bevorzugt 1,0 bis 2,5 Gew.-%, bei angestrebten Schaumdichten von 150 bis 300 g/l,
- 0,4 bis 5 Gew.-%, bevorzugt 0,6 bis - 3 Gew.-% und besonders bevorzugt 1,0 bis 2,0 Gew.-%, bei angestrebten Schaumdichten von 300 bis 600 g/l und
- 0,3 bis 4 Gew.-%, bevorzugt 0,5 bis 2,5 Gew.-%, besonders bevorzugt 0,8 bis 1,5 Gew.-%, bei angestrebten Schaumdichten von 600 g/l bis 800 g/l.

Ein "*hohes Expansionsvolumen*" bedeutet dabei eine Expansion um mehr als das 40-fache des ursprünglichen Volumens vor der Expansion.

Ferner wird für eine thermisch expandierbare Verbindung, welche ein niedriges Expansionsvolumen erzeugt, wie beispielsweise expandierbarer Vermiculit, vorgeschlagen, deren Menge, bezogen auf die gesamte Zusammensetzung, abhängig von der angestrebten Schaumdicht wie folgt zu wählen:
- 1 bis 25 Gew.-% bevorzugt 3 bis 20 Gew.-% bei angestrebten Schaumdichten von 150 bis 300 g/l,
- 0,5 bis 15 Gew.-%, bevorzugt 2 bis 15 Gew.-% bei angestrebten Schaumdichten von 300 bis 600 g/l
- 0,4 bis 10 Gew.-%, bevorzugt 1 bis 10 Gew.-% bei angestrebten Schaumdichten von 600 bis 800 g/l.

Ein "*niedriges Expansionsvolumen*" bedeutet dabei eine Expansion bis zum 20-fachen des ursprünglichen Volumens vor der Expansion.

Weiterhin kann es vorgesehen sein, dass die erfindungsgemäße Zusammensetzung außerdem weitere Inhaltsstoffe und/oder Additive enthält, um die Anwendungseigenschaften der erfindungsgemäßen Zusammensetzung zu optimieren. Solche Inhaltsstoffe bzw. Additive können beispielsweise unter Verflüssigern, Verzögerern, Stabilisierungsmitteln, Entschäumern, Beschleunigern, Korrosionsinhibitoren, Füllstoffen und dergleichen ausgewählt werden. Dabei kann dasselbe Additiv auch mehreren dieser vorbezeichneten Gruppen angehören.

Beispielsweise kann die erfindungsgemäße Zusammensetzung mindestens einen Verflüssiger enthalten, insbesondere in Mengen von 0,01 bis 5 Gew.-%, vorzugsweise 0,05 bis 2 Gew.-%, besonders bevorzugt 0,1 bis 1,0 Gew.-%, bezogen auf die Zusammensetzung. Beispiele für erfindungsgemäß bevorzugte Verflüssiger sind Verflüssiger auf der Basis modifizierter Polycarboxylatether. Insbesondere werden die Verflüssiger derart ausgewählt, dass sie den Wasserbedarf beim Anmachen reduzieren und zudem vorteilhafterweise auch zu einer besonders guten Frühfestigkeitsentwicklung führen bzw. diese fördern.

Weiterhin kann die erfindungsgemäße Zusammensetzung zur Optimierung der Anwendungseigenschaften ein die rheologischen und/oder physikalischen Eigenschaften verbesserndes bzw. beeinflussendes Additiv enthalten. Dieses kann beispielsweise auf Basis eines in Wasser redispergierbaren Polymerbindemittels, vorzugsweise auf Basis von Vinylacetat und Ethylen ausgebildet sein (Ethylen/Vinylacetat-Copolymer). Ein derartiges Additiv kann insbesondere in Mengen von 1 bis 15 Gew.-%, vorzugsweise 2 bis 10 Gew.-%, bezogen auf die Zusammensetzung, eingesetzt werden.

Um die Abbindeeigenschaften der Zusammensetzung einzustellen und auf die jeweiligen Anwendungsbedürfnisse anzupassen, kann die erfindungsgemäße Zusammensetzung ferner einen Abbindeverzögerer oder einen Abbindebschleuniger enthalten.

Ein besonders effektiver Abbindebeschleuniger für Bindemittel auf Basis von im Wesentlichen Calciumsulfat, was auch Mischungen von Gips mit anderen hydraulischen Bindemitteln, wie etwa Zement, in denen Gips der Hauptbestandteil der Bindemittelkomponente ist, mit einschließt, sind Beschleuniger auf der Basis von Kaliumsulfat (K₂SO₄) und/oder auf der Basis von fein gemahlenem Gips bzw. Calciumsulfat-Dihydrat (CaSO₄·2H₂O). Ferner ist es möglich, eine Mischung aus Calciumsulfat-Dihydrat (CaSO₄·2H₂O) und einem oberflächenaktiven Mittel, wobei das oberflächenaktive Mittel in Form eines oder mehrerer synthetischer, wasserlöslicher, anionischer oberflächenaktiver Mittel aus der Gruppe der festen Natriumalkylatsulfonate und Natriumlaurylsulfate oder eines oder mehrerer synthetischer, wasserlöslicher, fester nichtionischer oberflächenaktiver Mittel ausgewählt ist, als Abbindebeschleuniger zu verwenden. In dieser Hinsicht wird Bezug genommen auf die DE 2 930 164 C2, deren Inhalt hiermit in diese Anmeldung aufgenommen wird.

Als Abbindebeschleuniger für Bindemittel auf der Basis von Zement kommen beispielsweise Verbindungen wie Alkali- oder Erdalkalicarbonaten, besonders bevorzugt Lithiumcarbonat zum Einsatz. Dies ist besonders vorteilhaft, da hierdurch die Abbindegeschwindigkeit des Bindemittels gesteuert werden kann. Durch diese Substanzen kann die Abbindegeschwindigkeit so eingestellt werden, dass einerseits eine ausreichend lange Verarbeitungsdauer der mit Wasser angemachten Brandschutzmasse möglich ist und andererseits das Bindemittel ausreichend schnell eine Eigenstabilisierung des Brandschutzschaums ermöglicht, bevor dieser nach dem Ausschäumen beginnt, in sich zusammen zu fallen.

Andererseits kann die Abbindegeschwindigkeit über diese Additive so eingestellt werden, dass die Eigenstabilität des Schaums nicht bereits zu einem Zeitpunkt erreicht wird, an dem die Treibmittelmischung noch nicht vollständig abreagiert ist. Die Menge in welcher der Abbindebschleuniger üblicherweise eingesetzt wird, ist abhängig von der Art des gewählten hydraulischen Bindemittels. Im Falle von Zement als hydraulisches Bindemittel kann der Abbindebeschleuniger in Mengen von 0,001 bis 1 Gew.-%, insbesondere 0,05 bis 0,25 Gew.-%, bezogen auf die Zusammensetzung, eingesetzt werden. Im Falle von Gips als hydraulisches Bindemittel kann der Abbindebeschleuniger in Mengen von 0,1 bis 10 Gew.-%, insbesondere 0,2 bis 3 Gew.-%, bezogen auf die Zusammensetzung, eingesetzt werden.

Weiterhin kann die erfindungsgemäße Zusammensetzung auch mindestens einen Entschäumer enthalten, beispielsweise eine feste Kombination von flüssigen Kohlenwasserstoffen, Polyglykolen und amorpher Kieselsäure. Ein solcher Entschäumer kann insbesondere in Mengen von 0,001 bis 1 Gew.-%, vorzugsweise 0,05 bis 3 Gew.-%, bezogen auf die Trockenmischung, eingesetzt werden. Durch den Einsatz von Entschäumern kann in Kombination mit den erfindungsgemäß eingesetzten Schaumstabilisatoren die Schaumstruktur und das Porenvolumen des Schaums beeinflusst werden.

Für alle vorgenannten Mengenangaben gilt, dass es einzelfallbedingt oder anwendungstechnisch gegebenenfalls erforderlich sein kann, von diesen Mengenangaben abzuweichen. Dies zu entscheiden, liegt im Ermessen des Fachmanns.

Die erfindungsgemäße Zusammensetzung kann darüber hinaus auch Polymere, wie Acrylate oder Polyurethane, beispielsweise in Form einer wässrigen Dispersion enthalten.

Außerdem kann die erfindungsgemäße Zusammensetzung mindestens einen Zusatz zur Einstellung des Wasserrückhaltevermögens enthalten. Geeignet für diesen Zweck sind zum Beispiel Cellulosederivate, insbesondere Celluloseether.

Eine weitere bevorzugte Ausführungsform der erfindungsgemäßen Zusammensetzung zeichnet sich dadurch aus, dass die Zusammensetzung anorganische Füllstoffe enthält ausgewählt aus Aluminiumoxiden, Aluminiumhydroxiden, Aluminiumsilikaten, Bauxit, Borsäure, Borax, Calciumsilikaten, Feldspate, Kaoline, Magnesiumoxide, Magnesiumhydroxide, Mullit, Perlit, Schamotte, Glimmer, Siliziumcarbid, Tonen, Zeolith, Glasschaum, Glashohlkugeln oder Flugasche. Dies ist besonders vorteilhaft, da durch diese Füllstoffe die mechanischen Eigenschaften des Brandschutzschaums verbessert werden können. Insbesondere kann durch den Einsatz solcher Füllstoffe ein Schrumpfen des Brandschutzschaums bei starker thermischer Belastung verhindert werden.

Besonders bevorzugte Füllstoffe sind Leichtfüllstoffe, da bei Einsatz dieser Füllstoffe das spezifische Gewicht der Brandschutzschäume reduziert werden kann, ohne dabei die mechanische Belastbarkeit zu reduzieren.

Zu den erfindungsgemäß geeigneten Leichtzuschlagstoffen gehören Leichtzuschlagstoffe auf Basis natürlicher Gesteinskörnungen, Leichtzuschlagstoffe auf Basis natürlicher Rohstoffe, Leichtzuschlagstoffe auf Basis von aus industriellen Nebenprodukten hergestellten Gesteinskörnungen und Leichtzuschlagstoffe auf Basis von industriellen Nebenprodukten.

Geeigneter Weise kann der erfindungsgemäß eingesetzte Leichtfüllstoff beispielsweise aus mineralischen Leichtfüllstoffen ausgewählt sein. Die erfindungsgemäß einsetzbaren Leichtfüllstoffe besitzen eine Kornrohdichte im Sinne der DIN 4226-2 (Februar 2002) unterhalb von 2000 kg/m³, bevorzugt unterhalb von 1200 kg/m², besonders bevorzugt unterhalb von 800 kg/m³, ganz besonders bevorzugt unterhalb von 500 kg/m³ oder gar 300 kg/m³.

Nichtbeschränkende Beispiele für erfindungsgemäß geeignete Leichtzuschlagstoffe sind: Glas-, Kunststoff- oder Keramikmikrohohlkugeln, Blähglas, Blähglimmer (Vermiculit), Blähperlit, Blähschiefer, Blähton, gesinterte Steinkohlenflugasche, Ziegelsplitt, Naturbims, Tuff, Lava (Lavaschlacke), Hüttenbims und Kesselsand.

Nach einer weiteren bevorzugten Ausführungsform der erfindungsgemäßen Zusammensetzung enthält diese Fasern und/oder Gewebe oder Gelege aus Fasern, wobei die Fasern ausgewählt sind aus Glas-, Cellulose-, Polyethylen-, Polypropylen-, Polyamid-, Kohlefasern, Steinwolle oder Mineralwolle. Dies ist besonders vorteilhaft, weil durch den Einsatz derartiger Fasern die Gefahr der Rissbildung insbesondere bei thermischer Belastung im Brandfall erheblich reduziert werden kann. Außerdem erhöhen sich durch den Einsatz solcher Materialien die Biegefestigkeit und das Elastizitätsmodul der ausgeschäumten Brandschutzmassen. Zusammen mit den thermisch expandierbaren Verbindungen bewirken die Kunststofffasern einen synergistischen Effekt, indem sie den Funktionserhalt der Struktur unterstützen und dafür sorgen, dass die thermisch expandierbare Verbindung nach der Expansion nicht weggeblasen wird. Sie verschmelzen und verglasen die thermisch expandierbaren Verbindungen und bilden so ein stabiles Gerüst.

Die erfindungsgemäße Zusammensetzung kann als Zwei- oder Mehrkomponenten-System konfektioniert sein, wobei der Begriff Mehrkomponenten-System auch Zweikomponenten-Systeme mit umfasst. Die Zusammensetzung ist bevorzugt als Zweikomponenten-System konfektioniert, in dem die einzelnen Bestandteile der Treibmittelmischung vor der Verwendung der Zusammensetzung reaktionsinhibierend voneinander getrennt sind und das hydraulische Bindemittel vor der Verwendung der Zusammensetzung reaktionsinhibierend von dem Anmachwasser getrennt ist. Die weiteren Bestandteile der Zusammensetzung sind entsprechend ihrer Verträglichkeit untereinander und mit den in der Zusammensetzung enthaltenen Verbindungen aufgeteilt und können in einer der beiden Komponenten oder in beiden Komponenten enthalten sein. Ferner kann die Aufteilung der weiteren Bestandteile, insbesondere der festen Bestandteile, davon abhängen, in welchen Mengen diese in der Zusammensetzung enthalten sein sollen. Durch entsprechende Aufteilung kann sich gegebenenfalls ein höherer Anteil, bezogen auf die gesamte Zusammensetzung ergeben. Die thermisch expandierbare Verbindung kann dabei als Gesamtmischung in einer Komponente oder anteilig aufgeteilt in mehreren Komponenten enthalten sein. Bevorzugt werden die Komponenten eines Zweikomponentensystems am oder nahe am Anwendungsort miteinander vermischt und die Mischung am gewünschten Ort, angewendet werden. Hierbei handelt es sich um sogenannte Ortschäume.

Gegenstand der Erfindung ist ferner die Verwendung einer erfindungsgemäßen Zusammensetzung zum Ausschäumen von Öffnungen, Kabel- und Rohrdurchführungen in Wänden, Böden und/oder Decken, von Fugen zwischen Decken und Wandteilen, zwischen Maueröffnungen und einzubauenden Konstruktionsteilen, wie Fenster- und Türstöcken, zwischen Decken und Wänden und zwischen Außenwänden und vorgehängten Fassaden von Gebäuden zum Zwecke des Brandschutzes. Hierbei werden die Komponenten der erfindungsgemäßen Zusammensetzung am oder nahe am Anwendungsort miteinander vermischt und die Mischung am gewünschten Ort, beispielsweise in eine Spalte, in einen Hohlraum oder auf eine Fläche, ein- oder aufgebracht werden.

Gegenstand der Erfindung sind ferner Brandschutzvorrichtungen, wie etwa Formkörper, die durch das eben beschriebene Verfahren erhältlich sind, wobei die Herstellung beispielsweise in einer Form erfolgen kann. Denkbar ist hier die Verwendung eines Formkörpers zur Herstellung von Formkörpern, die in Maueröffnungen, z.B. Kabelschotte, eingesetzt werden. Bevorzugt ist auch die Verwendung für Kabel-, Rohr-, Stromschienen- und/oder Fugenabschottungen. Sie können auch bevorzugt als Dichtungen zum Brandschutz und zur Herstellung von Brandschutzklebmassen, zum Beschichtung von Oberflächen und zur Herstellung von Sandwichbauteilen oder Verbundplatten verwendet werden. Hierzu wird eine erfindungsgemäße Zusammensetzung mit einer geeigneten Menge an Wasser vermischt, anschließend in einen Hohlkörper mit einer oder mehreren Kavitäten gefüllt und die Zusammensetzung unter Ausbildung eines Brandschutzschaums aushärtet. Die geeignete Wassermenge richtet sich in erster Linie nach der Menge und Typ des eingesetzten Bindemittels und kann einfach durch den Fachmann mit einigen Handversuchen ermitteln werden. Die Wassermenge liegt dabei beispielsweise im Verhältnis Feststoffanteil der erfindungsgemäßen Zusammensetzung zu Wasser von 5:1 bis 1:1. Dieses Verfahren ist besonders vorteilhaft, weil der Brandschutzschaum erst nach Befüllen der Form oder des Hohlkörpers entsteht und so sämtliche Hohlräume durch die Schaumexpansion während des Abbindevorgangs selbstständig ausfüllt. Dadurch lassen sich Brandschutzeinrichtungen mit einem erfindungsgemäßen Brandschutzschaum herstellen, die nahezu vollständig mit dem Brandschutzschaum gefüllt sind, selbst wenn diese unregelmäßig geformt sind. Derartige Brandschutzeinrichtungen sind damit denen überlegen, die beispielsweise mit Brandschutzmatten ausgelegt werden, da letztere nicht ohne weiteres eine vollständige Füllung der Brandschutzeinrichtung sicherstellen können. Ein weiterer Vorteil ist, dass dieses erfindungsgemäße Verfahren auch auf einer Baustelle durchgeführt werden kann, um Mauerdurchbrüche oder Türzargen brandhemmend auszustatten.

Die Formkörper schäumen im Brandfall auf und so wird eine Flammenausbreitung verhindert und sind somit als Dichtelemente, Sicherungsvorrichtungen, Brandsperren oder Verkleidungen geeignet. Man kann diese somit als Verfugungen, Verschlüsse für Kabeldurchbrüche, zum Verschließen von Maueröffnungen verwenden.

### Die Erfindung wird nachstehend anhand einiger Beispiele näher erläutert

### AUSFÜHRUNGSBEISPIELE

Es werden jeweils die in den Beispielen und Vergleichsbeispielen aufgelisteten Einzelkomponenten vermengt und homogenisiert. Für die Anwendung werden diese Mischungen mechanisch in einem Behälter miteinander vermischt bis homogene Vermischung erreicht wurde und bis das Schäumen anfing.

### Gasbrennertest

Zur Beurteilung des Verhaltens der geschäumten erfindungsgemäßen Zusammensetzung im Brandfall wurde jeweils ein Brandschott erstellt. Hierfür wurde in einen Porenbetonblock mit einer Tiefe von 100 mm mittels eines Kernbohrgerätes eine Durchführung mit einem Durchmesser von 82 mm geschaffen. In die Durchführung wurde mittels der in den Vergleichsbeispielen und den Beispielen beschriebenen Zusammensetzungen mittig ein Kabel (EN 1366-3; B-Kabel / NYY 1x95 RM-J; Außendurchmesser 19 mm; PVC Mantel; Länge 170 mm) über die gesamte Tiefe des Porenbetonblocks installiert, wobei der zwischen dem Kabel und der Wandung des Porenbetonblocks mit Schaum gefüllt wurde. Nach Aushärten der Zusammensetzung wurde das Brandschott mit einem Gasbrenner mit Luftzufuhr (Erdgas/Luft Leistung ca. 8 kW; Tischbrenner "Thüringer Modell" ESL100, Fa. Herbert Arnold) aus einem Abstand von 25 cm über 30 min beflammt. Durch in Augenscheinnahme wurden der Zustand der Zusammensetzung, insbesondere der Schaumstruktur, beurteilt sowie die Grenzen zum Kabel sowie zur Durchführungsinnenwand hin auf Ringbildung untersucht.

**Vergleichsbeispiel 1 (β-Gips ohne expandierbare Verbindung)**

| **Bestandteil** | **Anteil [Gew.-%]** |
|---|---|
| Calciumsulfat(halbhydrat) ^{a)} | 58,8 |
| Mangandioxid ^{b)} | 0,3 |
| Calciumcarbonat, beschichtet ^{c)} | 3,2 |
| Glasfaser ^{d)} | 1,2 |
| Gips(dihydrat) ^{e)} | 0,5 |
| Wasserstoffperoxid-Lösung 3% | 36,0 |

| | |
|---|---|
| ^{a)} Bau+ und Elektriker Gips (β-Gips), Baumit GmbH ^{b)} Mangangrau, Kremer Pigmente GmbH & Co. KG ^{c)} Omyabond 520-OM, Omya GmbH ^{d)} Glasfaser Kurzschnitt FGCS 70-30/3, Fa. STW ^{e)} Lenzin (Calciumsulfat-Dihydrat), Kremer Pigmente GmbH & Co. KG | |

**Vergleichsbeispiel 2 (α-Gips ohne expandierbare Verbindung)**

| **Bestandteil** | **Anteil [Gew.-%]** |
|---|---|
| Calciumsulfat(halbhydrat) ^{a)} | 60,5 |
| Mangandioxid ^{b)} | 0,4 |
| Calciumcarbonat, beschichtet ^{c)} | 3,8 |
| Naturgips ^{d)} | 2,0 |
| Kunststofffasern ^{e)} | 1,3 |
| Wasserstoffperoxid-Lösung 3% | 32,0 |

| | |
|---|---|
| ^{a)} Siladent Hartformgips HF1 (α-Gips), Siladent Dr. Böhme & Schöps GmbH ^{b)} Mangangrau, Kremer Pigmente GmbH & Co. KG ^{c)} Omyabond 520-OM, Omya GmbH ^{d)} Lenzin Calciumsulfat-Dihydrat), Kremer Pigmente GmbH & Co. KG ^{e)} Polyester Faserfüllstoff 231/100; Fa. STW | |

**Vergleichsbeispiel 3 (α-Gips mit Blähgraphit; zu hohe Schaumdichte)**

| **Bestandteil** | **Anteil [Gew.-%]** |
|---|---|
| Calciumsulfat(halbhydrat) ^{a)} | 65,5 |
| Mangandioxid ^{b)} | 0,3 |
| Calciumcarbonat, beschichtet ^{c)} | 3,6 |
| Naturgips ^{d)} | 1,5 |
| Pentaerythrit ^{e)} | 2,3 |
| Blähgraphit ^{f)} | 1,9 |
| Kunststofffasern ^{g)} | 2,7 |
| Wasserstoffperoxid-Lösung 3% | 22,2 |

| | |
|---|---|
| ^{a)} Siladent Hartformgips HF1 (alpha Gips), Siladent Dr. Böhme & Schöps GmbH ^{b)} Mangangrau, Kremer Pigmente GmbH & Co. KG ^{c)} Omyabond 520-OM, Omya GmbH ^{d)} Lenzin Calciumsulfat-Dihydrat), Kremer Pigmente GmbH & Co. KG ^{e)} Charmor® PM 40, der Perstorp ^{f)} Nord-Min 351, der Nordmin Engineering Ltd ^{g)} Polyester Cordfäden Kurzschnitt 164 S/ 4 mm, Fa. STW | |

**Vergleichsbeispiel 4 (α-Gips mit zu hohem Blähgraphit-Anteil)**

| **Bestandteil** | **Anteil [Gew.-%]** |
|---|---|
| Calciumsulfat(halbhydrat) ^{a)} | 55,4 |
| Mangandioxid ^{b)} | 0,5 |
| Calciumcarbonat, beschichtet ^{c)} | 3,0 |
| Naturgips ^{d)} | 1,8 |
| Pentaerythrit ^{e)} | 1,9 |
| Blähgraphit ^{f)} | 7,0 |
| Glasfasern ^{g)} | 1,9 |
| Wasserstoffperoxid-Lösung 3% | 28,5 |

| | |
|---|---|
| ^{a)} Siladent Hartformgips HF1 (alpha Gips), Siladent Dr. Böhme & Schöps GmbH ^{b)} Manganschwarz, Kremer Pigmente GmbH & Co. KG ^{c)} Omyabond 520-OM, Omya GmbH ^{d)} Lenzin Calciumsulfat-Dihydrat), Kremer Pigmente GmbH & Co. KG ^{e)} Charmor® PM 40, Perstorp ^{f)} Nord-Min 351, der Nordmin Engineering Ltd ^{g)} Glasfaser Kurzschnitt FGCS 70-30/3, Fa. STW | |

**Vergleichsbeispiel 5 (α-Gips mit sehr feinen BG-Partikeln)**

| **Bestandteil** | **Anteil [Gew.-%]** |
|---|---|
| Calciumsulfat (halbhydrat) ^{a)} | 59,0 |
| Mangandioxid ^{b)} | 0,5 |
| Calciumcarbonat, beschichtet ^{c)} | 3,2 |
| Naturgips ^{d)} | 2,4 |
| Pentaerythrit ^{e)} | 1,9 |
| Blähgraphit ^{f)} | 2,0 |
| Glasfasern ^{g)} | 2,0 |
| Wasserstoffperoxid 3% | 29,0 |

| | |
|---|---|
| ^{a)} Siladent Hartformgips HF1 (alpha Gips), Siladent Dr. Böhme & Schöps GmbH ^{b)} Manganschwarz, Kremer Pigmente GmbH & Co. KG ^{c)} Omyabond 520-OM, Omya GmbH ^{d)} Lenzin Calciumsulfat-Dihydrat), der Kremer Pigmente GmbH & Co. KG ^{e)} Charmor® PM 40, Perstorp ^{f)} Nord-Min 20 (nin 80% below 75µm), der Nordmin Engineering Ltd ^{g)} Glasfaser Kurzschnitt FGCS 70-30/3, Fa. STW | |

**Beispiel 1 (α-Gips mit Blähgraphit)**

| **Bestandteil** | **Anteil [Gew.-%]** |
|---|---|
| Calciumsulfat(halbhydrat) ^{a)} | 59,0 |
| Mangandioxid ^{b)} | 0,4 |
| Calciumcarbonat, beschichtet ^{c)} | 3,2 |
| Naturgips ^{d)} | 1,3 |
| Pentaerythrit ^{e)} | 2,0 |
| Blähgraphit ^{f)} | 1,7 |
| Kunststofffasern ^{g)} | 2,4 |
| Wasserstoffperoxid-Lösung 3% | 30,0 |

| | |
|---|---|
| ^{a)} Siladent Hartformgips HF1 (α-Gips), Siladent Dr. Böhme & Schöps GmbH ^{b)} Mangangrau, Kremer Pigmente GmbH & Co. KG ^{c)} Omyabond 520-OM, Omya GmbH ^{d)} Lenzin Calciumsulfat-Dihydrat), Kremer Pigmente GmbH & Co. KG ^{e)} Charmor® PM 40, Perstorp ^{f)} Nord-Min 351, der Nordmin Engineering Ltd ^{g)} Polyester Cordfäden Kurzschnitt 164 S/ 1 mm, Fa. STW | |

**Beispiel 2 (α-Gips mit expandierbarem Vermiculit)**

| **Bestandteil** | **Anteil [Gew.-%]** |
|---|---|
| Calciumsulfat(halbhydrat) ^{a)} | 52,1 |
| Mangandioxid ^{b)} | 0,4 |
| Calciumcarbonat, beschichtet ^{c)} | 2,9 |
| Naturgips ^{d)} | 2,1 |
| Pentaerythrit ^{e)} | 1,6 |
| Vermiculit (fein) ^{f)} | 10,0 |
| Glasfasern ^{g)} | 1,9 |
| Wasserstoffperoxid 3% | 29,0 |

| | |
|---|---|
| ^{a)} Casea Spezial 40 (α-Gips), Siladent Dr. Böhme & Schöps GmbH ^{b)} Mangangrau, Kremer Pigmente GmbH & Co. KG ^{c)} Omyabond 520-OM, Omya GmbH ^{d)} Lenzin (Calciumsulfat-Dihydrat), Kremer Pigmente GmbH & Co. KG ^{e)} Charmor® PM 40, Perstorp ^{f)} Vermiculit ADT-V052; Fa. ADT ^{g)} Glasfaser Kurzschnitt FGCS 70-30/3, Fa. STW | |

**Beispiel 3 (α-Gips mit Zementanteil und Blähgraphit)**

| **Bestandteil** | **Anteil [Gew.-%]** |
|---|---|
| Calciumsulfat(halbhydrat) ^{a)} | 51,5 |
| Mangandioxid ^{b)} | 0,5 |
| Calciumcarbonat, beschichtet ^{c)} | 2,8 |
| Naturgips ^{d)} | 2,0 |
| Pentaerythrit ^{e)} | 1,6 |
| Blähgraphit ^{f)} | 1,3 |
| Glasfasern ^{g)} | 1,3 |
| Zement ^{h)} | 10,0 |
| Wasserstoffperoxid-Lösung 3% | 29,0 |

| | |
|---|---|
| ^{a)} Siladent Hartformgips HF1 (α-Gips), Siladent Dr. Böhme & Schöps GmbH ^{b)} Mangangrau, Kremer Pigmente GmbH & Co. KG ^{c)} Omyabond 520-OM, Omya GmbH ^{d)} Lenzin Calciumsulfat-Dihydrat), Kremer Pigmente GmbH & Co. KG ^{e)} Charmor® PM 40, Perstorp ^{f)} Nord-Min 20 (nin 80% below 75µm), Nordmin Engineering Ltd ^{g)} Glasfaser Kurzschnitt FGCS 70-30/3, Fa. STW ^{h)} Secar 51, Fa. Kerneos | |

**Tabelle 1: Eigenschaften der Beispielformulierungen (Schaumdichte, Abbindezeit, Beobachtungen im Gasbrennertest)**

| **Beispiel** | **Schaumdichte [g/l]** | **Abbindezeit [min.]** | **Beobachtung im Gasbrennertest** |
|---|---|---|---|
| Vergleich 1 | 220 | ∼15 | Riss- und Spaltbildung |
| Vergleich 2 | 210 | ∼10 | geringe Spaltbildung |
| Vergleich 3 | 400 | ∼10 | Abbau und Zerstören des Schaumes |
| Vergleich 4 | 240 | ∼9 | Abbau und Zerstören des Schaumes |
| Vergleich 5 | 235 | ∼9 | Geringe Spaltbildung und teilweiser Abbau des Schaumes |
| 1 | 230 | ∼11 | keine Spaltbildung und kein Abbau des Schaumes |
| 2 | 300 | ∼11 | keine Spaltbildung und kein Abbau des Schaumes |
| 3 | 260 | ∼25 | keine Spaltbildung und kein Abbau des Schaumes |

## Patentansprüche

1. Hydraulisch abbindende Zusammensetzung zur Herstellung von anorganischen Brandschutz- und/oder Isolierschäumen, enthaltend
(i) wenigstens ein hydraulisches Bindemittel,
(ii) eine Treibmittelmischung,
(iii) wenigstens eine thermisch expandierbare Verbindung und
(iv) gegebenenfalls einen Schaumstabilisator,
wobei die wenigstens eine thermisch expandierbare Verbindung, abhängig von deren Teilchengröße und der eingestellten Dichte der geschäumten Zusammensetzung in solch einer Menge enthalten ist, dass durch deren Expansion beim Erhitzen der Zusammensetzung über deren Onset-Temperatur die Schaumstruktur der geschäumten Zusammensetzung nicht zerstört wird.

2. Zusammensetzung nach Anspruch 1, wobei bei einer eingestellten Schaumdichte
- von 150 g/l bis 300 g/l die Menge an thermisch expandierbarer Verbindung zwischen 0,5 und 25 Gew.-%,
- von 300 g/l bis 600 g/l die Menge an thermisch expandierbarer Verbindung zwischen 0,4 und 15 Gew.-% und
- von 600 g/l bis 800 g/l die Menge an thermisch expandierbarer Verbindung zwischen 0,3 bis 10 Gew.-%,
jeweils bezogen auf die gesamte Zusammensetzung, beträgt.

3. Zusammensetzung nach Anspruch 1 oder 2, wobei die wenigstens eine thermisch expandierbare Verbindung aus Graphit-Interkallationsverbindungen, blähfähigem silikatischen Material oder Kombinationen davon ausgewählt ist.

4. Zusammensetzung nach Anspruch 3, wobei die mindestens eine thermisch expandierbare Verbindung eine Graphit-Interkallationsverbindung ist und wobei bei einer eingestellten Schaumdichte
- von 150 g/l bis 300 g/l die Menge an Graphit-Interkallationsverbindung zwischen 0,5 und 6 Gew.-%,
- von 300 g/l bis 600 g/l die Menge an Graphit-Interkallationsverbindung zwischen 0,4 und 5 Gew.-% und
- von 600 g/l bis 800 g/l die Menge an Graphit-Interkallationsverbindung zwischen 0,3 bis 4 Gew.-%,
jeweils bezogen auf die gesamte Zusammensetzung, beträgt.

5. Zusammensetzung nach Anspruch 3, wobei die mindestens eine thermisch expandierbare Verbindung ein expandierbarer Vermiculit ist und wobei bei einer eingestellten Schaumdichte
- von 150 g/l bis 300 g/l die Menge an expandierbarem Vermiculit zwischen 1 und 25 Gew.-%,
- von 300 g/l bis 600 g/l die Menge an expandierbarem Vermiculit zwischen 0,5 und 15 Gew.-% und
- von 600 g/l bis 800 g/l die Menge an expandierbarem Vermiculit zwischen 0,4 bis 10 Gew.-%,
jeweils bezogen auf die gesamte Zusammensetzung, beträgt.

6. Zusammensetzung nach einem der Ansprüche 3 bis 5, wobei die wenigstens eine thermisch expandierbare Verbindung eine Graphit-Interkallationsverbindung ist.

7. Zusammensetzung nach Anspruch 6, wobei die Graphit-Interkallationsverbindung eine Teilchengröße von 80% > 75 µm aufweist und in einer Menge von etwa 0,3 bis etwa 6,0 Gew-%, bezogen auf die gesamte Zusammensetzung, enthalten ist.

8. Zusammensetzung nach einem der vorhergehenden Ansprüche, wobei das wenigstens eine hydraulische Bindemittel ein pH-neutrales oder alkalisches Bindemittel ist.

9. Zusammensetzung nach Anspruch 8, wobei das hydraulische Bindemittel aus Zement, Trass, Puzzolane, hydraulische Kalke und Gips oder aus Mischungen von diesen ausgewählt ist.

10. Zusammensetzung nach einem der vorhergehenden Ansprüche, wobei die Treibmittelmischung Verbindungen umfasst, die nach deren Vermischen unter Bildung von Kohlendioxid (CO₂), von Wasserstoff (H₂) von Sauerstoff (O₂) oder von Stickstoff (N₂) miteinander reagieren.

11. Zusammensetzung nach Anspruch 10, wobei die Treibmittelmischung einen Sauerstoffträger und einen Katalysator umfasst, insbesondere Wasserstoffperoxid und einen Zerfallskatalysator.

12. Zusammensetzung nach einem der vorstehenden Ansprüche, wobei die Zusammensetzung Fasern und/ oder Gewebe oder Gelege aus Fasern enthält, wobei die Fasern aus Glas-, Cellulose-, Polyethylen-, Polypropylen-, Polyester-, Polyamid-, Kohlefasern, Steinwolle und/oder Mineralwolle ausgewählt sind.

13. Zusammensetzung nach einem der vorstehenden Ansprüche, wobei die Zusammensetzung ferner Abbindeverzögerer oder Abbindebeschleuniger enthält.

14. Zusammensetzung nach einem der vorstehenden Ansprüche, wobei der Schaumstabilisator aus hydrophobiertem Calciumcarbonat, hydrophobiertem Titanoxid, hydrophobiertem Bariumsulfat, hydrophobiertem Aluminiumoxid sowie Gemischen davon, Tensiden, Bentonit, Stärke sowie Derivaten davon, Gelatinen, Cellulose sowie Derivaten davon, Polymeren oder Polymerdispersionen ausgewählt ist.

15. Anorganischer Brandschutzschaum, herstellbar aus einer hydraulisch abbindenden Zusammensetzung nach einem der Ansprüche 1 bis 14 und Wasser oder eine wässrigen Lösung.

16. Brandschutzschaum nach Anspruch 15, wobei der Schaum im abgebundenen, trocknen Zustand eine Dichte von < 800 g/l aufweist.

17. Brandschutzvorrichtung enthaltend einen Brandschutzschaum nach Anspruch 15 oder 16.

18. Brandschutzvorrichtung nach Anspruch 17, wobei der Brandschutzschaum als Formkörper oder als Füllung in einer Tür, einer Türzarge, einem Hohlprofil, einer Zwischenwand oder einer Deckenpaneele ausgestaltet ist.

19. Verfahren zur Herstellung einer Brandschutzvorrichtung, bei dem eine Zusammensetzung nach einem der Ansprüche 1 bis 14 mit einer geeigneten Menge an Wasser oder wässriger Lösung vermischt wird, anschließend in einen Hohlkörper mit einer oder mehreren Kavitäten gefüllt wird und die Zusammensetzung unter Ausbildung eines Brandschutzschaums aushärtet.

20. Verwendung einer Zusammensetzung nach einem der Ansprüche 1 bis 14 oder eines Brandschutzschaums nach einem der Ansprüche 15 oder 16 zum Ausschäumen von Öffnungen, Kabel- und Rohrdurchführungen in Wänden, Böden und/oder Decken, von Fugen zwischen Decken und Wandteilen, zwischen Maueröffnungen und einzubauenden Konstruktionsteilen, zwischen Decken und Wänden und zwischen Außenwänden und vorgehängten Fassaden von Gebäuden zum Zwecke des Brandschutzes.

21. Verwendung einer Zusammensetzung nach einem der Ansprüche 1 bis 14 oder eines Brandschutzschaums nach einem der Ansprüche 15 oder 16 zur Herstellung einer Brandschutzvorrichtung oder einer Brandschutzabschottung.
